# EUROPEAN PATENT SPECIFICATION

(11) **EP 2 855 913 B1**
(45) Date of publication and mention of the grant of the patent: **01.08.2018**
(21) Application number: 13721764.2
(22) Date of filing: 10.05.2013
(51) Int. Cl.: F02M 35/16, B60K 13/02, B62D 25/10

(54) **AIR INTAKE ARRANGEMENTS**
LUFTEINLASSANORDNUNGEN
AGENCEMENTS D'ADMISSION D'AIR

(30) Priority: 24.05.2012 GB 201209100
(43) Date of publication of application: 08.04.2015
(73) Proprietor: AGCO International GmbH, 8212 Neuhausen am Rheinfall (CH)
(72) Inventor: MAIER, Thomas, 87600 Kaufbeuren (DE); OPITZ, Marco, 87616 Marktoberdorf (DE); JUTZ, Georg, 87616 Marktoberdorf (DE)
(74) Representative: AGCO Intellectual Property Department
(86) International application number: PCT/EP2013/059714
(87) International publication number: WO 2013/174662

(56) References cited:
- EP-A2- 1 103 405
- DE-A1- 4 123 360
- DE-A1-102007 054 824
- DE-U1- 8 715 030
- GB-A- 845 708
- JP-U- S6 284 526
- US-A1- 2004 262 061
- US-B1- 6 463 901

## Description

This invention relates to air intake arrangements and in particular to such arrangements for use under tractor engine hoods.

The engine compartments of tractors are becoming progressively more crowded and space is at a premium. There are many bulky components which have to be housed beneath the engine hood in particular the engine air intake member and associated filters. The problem of a crowded engine compartment is compounded by the additional requirement to have the upper surface of the hood as low as possible to improve forward visibility for the tractor.

German patent application DE 41 23 360 A1 describes an air intake arrangement for a tractor engine hood in which an elongate air intake member is attached to, or provides, the upper surface of the hood. Air is drawn into the intake member from above the hood though an opening part-way along the length of the hood.

Thus according to the present invention there is provided a tractor as claimed in claim 1. The tractor comprises an air intake arrangement for a tractor engine hood comprising an air intake member with an air intake opening through which air is drawn into the engine, the intake member having an upper surface portion forming a closed wall for air guidance, and arranged to project through an aperture formed in the upper surface of the hood with the hood in its closed position so that the upper surface portion of the intake member forms a continuation of the upper surface of the hood.

The upper surface portion of the intake member may be provided with a surrounding sealing portion onto which the hood closes when the hood is in its closed position.

The portion of the hood surrounding the aperture in the hood may also be shaped to co-operate with the sealing portion of the intake member when the hood is in its closed position.

The air intake member may be located above a tractor cooling package and draw the air into the engine between the underside of the hood and the cooling package.

An outlet of the air intake member is conveniently connected with an engine air filter arrangement.

The air filter arrangement may be conveniently located above the engine between the engine and the hood.

The air intake member may have two outlets connected with separate filters located one on each side of the engine.

Embodiments of the present invention will now be described, by way of example only, with reference to the accompanying drawings in which:-
Figure 1 shows diagrammatically a section through a tractor engine compartment provided with a first configuration of air intake arrangement in accordance with the present invention;
Figure 2 shows an external view of a tractor with its engine compartment partly in section showing the air intake arrangement of Figure 1;
Figure 3 shows an external view of a tractor provided with the air intake arrangement of Figure 1 with the engine compartment hood in a raised position;
Figure 4 shows an air intake arrangement in accordance with the present invention fitted with air filters on respective sides of the engine; and
Figure 5 shows the sealing arrangement between the hood and the air intake arrangement on a larger scale.

Referring to the drawings, a tractor engine compartment 10 houses an engine 11 provided with a cooling fan 12 driven from the engine which draws cooling air through a cooling package 13 which includes a radiator 14, a charge air cooler 15, a condenser 16, and an oil cooler 17 as shown by arrows X.

Above the engine 11 is a pivoting engine compartment hood 18 which includes an aperture 19 through which an upper surface 20 of an engine air intake box 21 extends. The intake box 21 has an air intake opening 22 and an outlet 23 connected with an air filter 24 through which air is drawn by the engine 11 as indicated by arrow Y. Although shown in the Figures as positioned above the cooling fan 12, it will readily be appreciated that the air intake box 21 may be located at any convenient position below the compartment hood 18 (for example toward the vehicle cab), with the corresponding aperture 19 positioned accordingly.

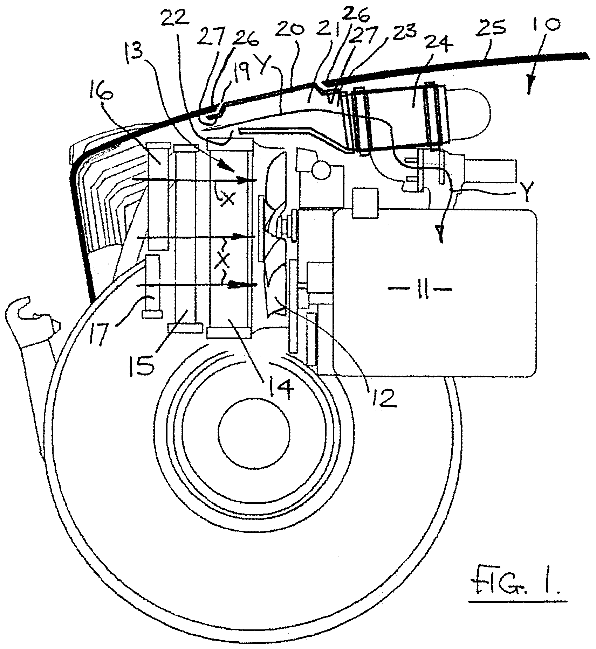

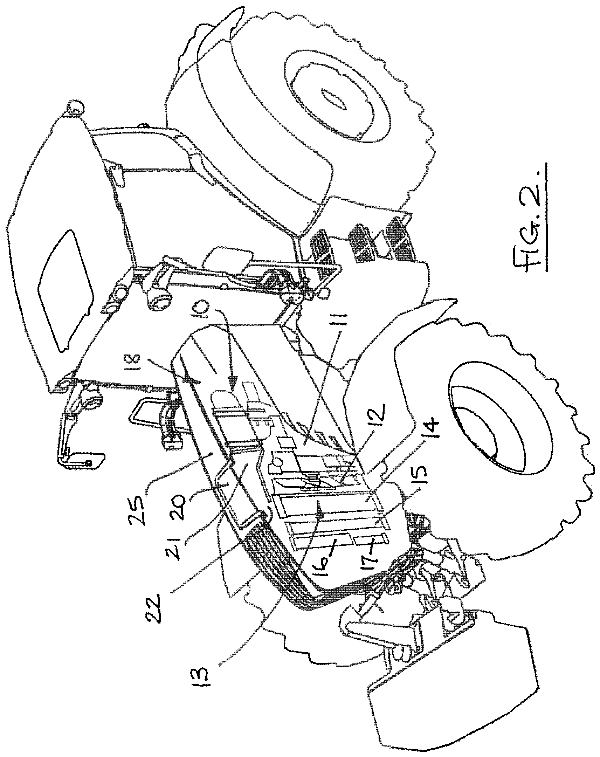

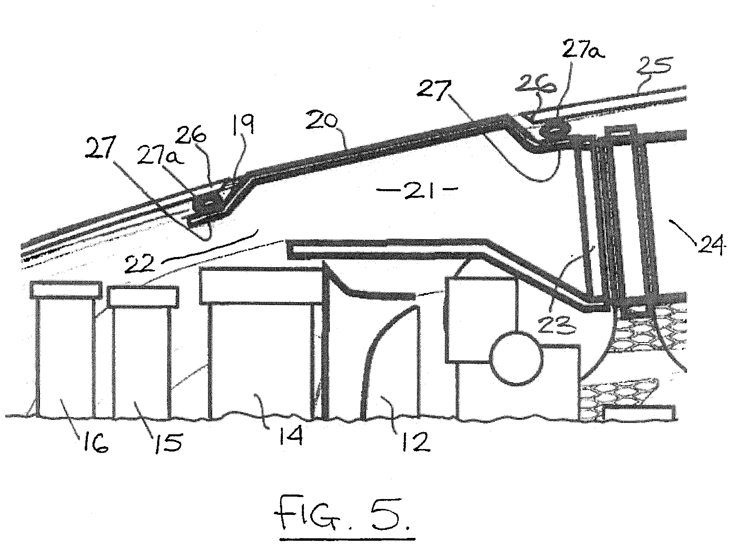

With the hood in its closed position, see Figures 1 and 2, the upper surface 20 of the air box 21 forms a continuation of the upper surface 25 of the hood and the aperture 19 in the hood is closed off. In this way, the upper surface 20 forms a closed wall for air guidance. The portion 26 of the hood 18 surrounding the aperture 19 cooperates with a sealing portion 27 of the intake box 21 which surrounds the upper surface portion 20 of the intake box to seal the aperture. One or both of the portion 26 of the hood and the sealing portion 27 of the air box may be provided with rubber or similar seals 27a (see Figure 5).

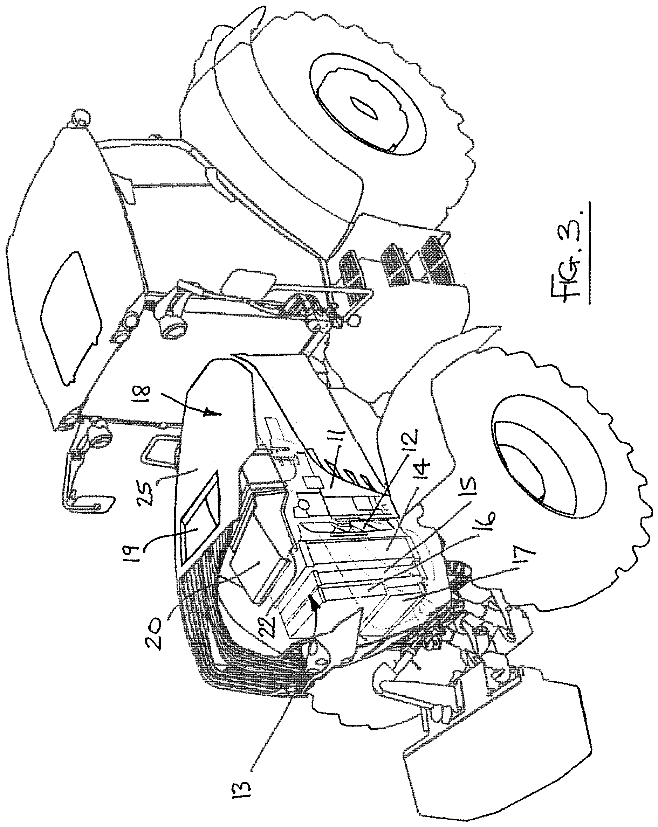

Figure 3 shows the hood 18 in the open position when the aperture 19 is more clearly visible.

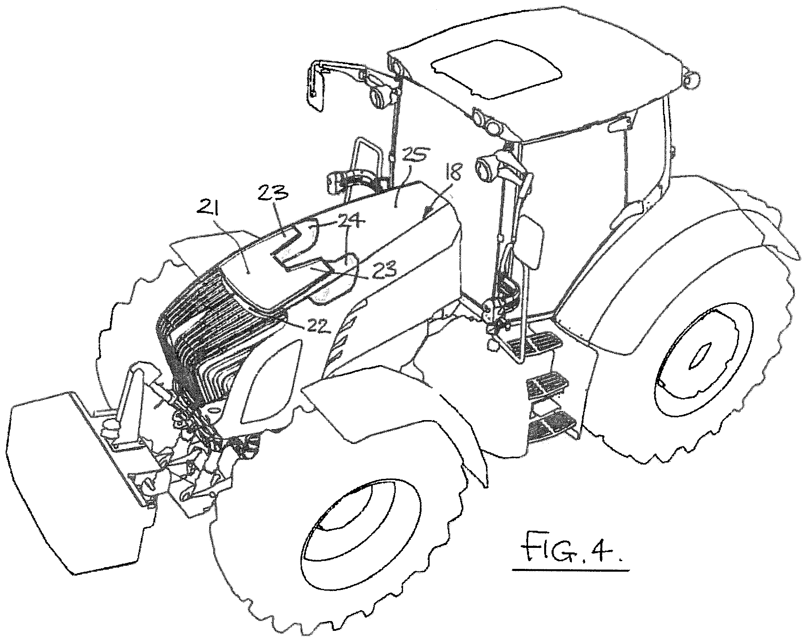

Figure 4 shows an arrangement in which the air intake member may have two outlets 23 connected with separate air filters 24 located one on each side of the engine 11

The present invention thus provides an air intake arrangement which takes up the minimum amount of space below the engine compartment hood 18 by having the upper surface 20 of the air intake member 21 projecting through an aperture 19 in the hood to form a continuation of the upper surface 25 of the hood. It also allows a low hood height to be achieved which improves forward visibility on the tractor.

## Claims

1. A tractor comprising:
a pivoting engine compartment hood (18) which includes an aperture (19), and
an air intake arrangement for the tractor engine hood (18), the air intake arrangement comprising an air intake member (21) with an air intake opening (22) through which air is drawn into the engine, the intake member (21) having an upper surface portion (20) forming a closed wall for air guidance,
**characterised in that** the intake member upper surface portion (20) is arranged to project through the aperture (19) formed in the upper surface of the hood with the hood in its closed position so that the upper surface portion (20) of the intake member forms a continuation of the upper surface of the hood (18).

2. A tractor according to claim 1, in which the upper surface portion (20) of the intake member (21) is provided with a surrounding sealing portion (27) onto which the hood (26, 18) closes when the hood is in its closed position.

3. A tractor according to claim 2 in which the portion of the hood (26) surrounding the aperture (19) in the hood (18) is shaped to co-operate with the sealing portion (27) of the intake member when the hood is in its closed position.

4. A tractor according to any of claims 1 to 3 in which the air intake member (21) is located above a tractor cooling package (13) and draws the air into the engine between the underside of the hood (18) and the cooling package (13).

5. A tractor according to any one of claims 1 to 4 in which an outlet (23) of the air intake member (21) is connected with an engine air filter arrangement (24).

6. A tractor according to claim 5 in which the air filter arrangement (24) is located above the engine between the engine and the hood (18).

7. A tractor according to claim 5 or 6 in which the air intake member (21) has two outlets connected with separate filters (24) located one on each side of the engine.

## Patentansprüche

1. Traktor, mit:
einer schwenkbaren Motorhaube (18), die eine Öffnung (19) aufweist, und
einer Einlassanordnung für die Motorhaube (18), wobei die Einlassanordnung ein Lufteinlassteil (21) mit einer Lufteinlassöffnung (22) aufweist, durch die Luft in den Motor gezogen wird, wobei das Einlassteil (21) einen oberen Oberflächenbereich (20) besitzt, der eine geschlossene Wandung für eine Führung der Luft bildet,
**dadurch gekennzeichnet, dass** der Oberflächenbereich (20) des Einlassteils angeordnet ist, um durch die in der oberen Oberfläche der Haube ausgebildet Öffnung (19) hervorzustehen, wenn sich die Haube in ihrer geschlossenen Position befindet, so dass der obere Oberflächenteil (20) des Einlassteils eine Fortsetzung der oberen Oberfläche der Haube (18) bildet.

2. Traktor nach Anspruch 1, wobei der obere Oberflächenteil (20) des Einlassteils (21) mit einem umgebenden Dichtungsbereich (27) versehen ist, auf dem die Haube (26, 18) schließt, wenn sich die Haube in ihrer geschlossenen Position befindet.

3. Traktor nach Anspruch 2, wobei der Bereich der Haube (26), der die Öffnung (19) in der Haube (18) umgibt, geformt ist, um mit dem Dichtungsbereich (27) des Einlassteils zusammenzuarbeiten, wenn sich die Haube in ihrer geschlossenen Position befindet.

4. Traktor nach einem der Ansprüche 1 bis 3, wobei der Lufteinlassteil (21) oberhalb einer Traktorkühleinheit (13) angeordnet ist und die Luft zwischen der Unterseite der Haube (18) und der Kühleinheit (13) in den Motor zieht.

5. Traktor nach einem der Ansprüche 1 bis 4, wobei ein Auslass (23) des Lufteinlassteils (21) mit einer Motorluftfilteranordnung (24) verbunden ist.

6. Traktor nach Anspruch 5, wobei die Luftfilteranordnung (24) oberhalb des Motors zwischen dem Motor und der Haube (18) angeordnet ist.

7. Traktor nach Anspruch 5 oder 6, wobei der Lufteinlassteil (21) zwei Auslässe aufweist, die mit separaten Filtern (24) verbunden sind, die an jeder der Seiten des Motors angeordnet sind.

## Revendications

1. Tracteur comprenant :
un capot de compartiment moteur pivotant (18) qui comporte un orifice (19), et
un agencement d'admission d'air pour le capot moteur de tracteur (18), l'agencement d'admission d'air comprenant un organe d'admission d'air (21) avec une ouverture d'admission d'air (22) à travers laquelle l'air est aspiré dans le moteur, l'organe d'admission (21) ayant une portion de surface supérieure (20) formant une paroi fermée pour le guidage d'air,
**caractérisé en ce que** la portion de surface supérieure d'organe d'admission (20) est agencée pour faire saillie à travers l'orifice (19) formé dans la surface supérieure du capot avec le capot dans sa position fermée de sorte que la portion de surface supérieure (20) de l'organe d'admission forme un prolongement de la surface supérieure du capot (18).

2. Tracteur selon la revendication 1, dans lequel la portion de surface supérieure (20) de l'organe d'admission (21) est pourvue d'une portion d'étanchéité encerclante (27) sur laquelle le capot (26, 18) se ferme lorsque le capot est dans sa position fermée.

3. Tracteur selon la revendication 2, dans lequel la portion du capot (26) encerclant l'orifice (19) dans le capot (18) est formée pour coopérer avec la portion d'étanchéité (27) de l'organe d'admission lorsque le capot est dans sa position fermée.

4. Tracteur selon l'une quelconque des revendications 1 à 3, dans lequel l'organe d'admission d'air (21) est situé au-dessus d'un boîtier de refroidissement de tracteur (13) et aspire l'air dans le moteur entre la sous-face du capot (18) et le boîtier de refroidissement (13).

5. Tracteur selon l'une quelconque des revendications 1 à 4, dans lequel un orifice de refoulement (23) de l'organe d'admission d'air (21) est raccordé à un agencement de filtre à air de moteur (24).

6. Tracteur selon la revendication 5, dans lequel l'agencement de filtre à air (24) est situé au-dessus du moteur entre le moteur et le capot (18).

7. Tracteur selon la revendication 5 ou 6, dans lequel l'organe d'admission d'air (21) a deux orifices de refoulement raccordés à des filtres (24) séparés situés sur chaque côté du moteur.
